Europäisches Patentamt

European Patent Office

Office européen des brevets

(11) Veröffentlichungsnummer: **0 171 382**
**B1**

(12) **EUROPÄISCHE PATENTSCHRIFT**

(45) Veröffentlichungstag der Patentschrift:
04.10.89

(21) Anmeldenummer: 85890139.0

(22) Anmeldetag: 25.06.85

(51) Int. Cl.⁴: **G 01 P  13/00,** G 01 P  3/50,
G 01 D  5/245

(54) Inkrementales Messsystem.

(30) Priorität: 06.07.84  AT 2174/84

(43) Veröffentlichungstag der Anmeldung:
12.02.86 Patentblatt 86/7

(45) Bekanntmachung des Hinweises auf die Patenterteilung:
04.10.89 Patentblatt 89/40

(84) Benannte Vertragsstaaten:
BE CH DE FR GB IT LI LU NL SE

(56) Entgegenhaltungen:
EP-A-0 062 698
EP-A-0 095 064
DE-A-2 052 677
DE-A-2 820 821
DE-A-3 041 291
DE-A-3 123 002
GB-A-2 001 786
US-A-4 331 917
US-A-4 468 617

(73) Patentinhaber: RSF- Elektronik Gesellschaft m.b.H.,
A-5121 Tarsdorf 93 (AT)

(72) Erfinder: Rieder, Heinz, Riedersbach 90, A-5120 St.
Pantaleon (AT)
Erfinder: Schwaiger, Max, A-5121 Ostermiething
(AT)

(74) Vertreter: Hübscher, Gerhard, Dipl.- Ing.,
Patentanwälte Dipl.- Ing. Gerhard Hübscher
Dipl.- Ing. Helmut Hübscher Dipl.- Ing. Heiner
Hübscher Spittelwiese 7, A-4020 Linz (AT)

EP 0 171 382 B1

## Beschreibung

Die Erfindung betrifft ein lineares, inkrementales Meßsystem, mit einem linearen Inkrementalmaßstab, einer Abtasteinheit zur Erzeugung verstellrichtungsabhängig phasenverschobener Abtastsignale und einer Auswerteeinheit zur Erzeugung von digitalen Zählsignalen, die einer Vor-Ruckwärts-Zähleinrichtung zuführbar sind, welche ihrerseits eine Anzeige- und /oder Steuereinrichtung steuert. Ein derartiges Meßsystem ist aus GB-A-2 001 786 bekannt.

Bei inkrementalen Meßsystemen dieser Art wird abhängig von der Ausbildung des Maßstabes und der Abtasteinheit nach optoelektronischen, induktiven, magnetischen oder kapazitiven Abtastprinzipen abgetastet, wobei in den meisten Fällen bei der Abtastung in ihrer Grundform sinusförmige Analogsignale erhalten werden, bei denen jeweils ein vollständiger Signalzug einem vollständigen Maßstabinkrement zugeordnet ist, das bei optoelektronischer Abtastung aus je einem Hell- und einem Dunkelfeld, im einfachsten Fall einem Teilungsstrich und einem Leerfeld bzw. Zwischenraum besteht. Unter dem Begriff "inkrementales Linear-Meßsystem" werden im vorliegenden Fall auch absolute Meßsysteme mit codierten Teilungsspuren verstanden, bei denen die feinst auflösende Teilungsspur eine Inkrementalspur ist. Bei den meisten linearen Meßsystemen der gegenständlichen Art werden bei der Abtastung wenigstens zwei beispielsweise um 90° phasenverschobene Abtastsignale erhalten, wobei das eine oder andere Signal abhängig von der Verstellrichtung der Abtasteinheit dem anderen Signal voreilt, so daß es möglich ist, aus den Analogsignalen über einen Richtungsdiskriminator auch die Verstellrichtung festzustellen. Die Analogsignale werden in einer Auswerteeinheit für die Erzeugung zählbarer Digitalsignale verarbeitet. Im einfachsten Fall werden die Nulldurchgänge der phasenverschobenen Signale ausgetriggert und die so erhaltenen binären Rechtecksignale einem Zähler zugeleitet, der vom Richtungsdiskriminator in Abhängigkeit von der momentanen Verstellrichtung Steuersignale erhält und abhängig von dieser Verstellrichtung seinen Stand erhöht oder vermindert. Der Stand des Vor-Rückwärtszählers gibt den Abstand der Abtasteinheit von einem gewählten oder am Maßstab in Form einer Referenzmarke vorhandenen Nullpunkt an. Bei anderen Ausführungen sind für die beiden Zählrichtungen gesonderte Zähler vorhanden, von denen jeweils der eine abhängig von der jeweiligen Zählrichtung mit den Zählsignalen beaufschlagt wird. Hier wird das auszuwertende Zählergebnis meist unter Verwendung eines Rechners aus den beiden Zählerständen rechnerisch ermittelt. Bei den üblichen Teilungen und der beschriebenen "einfachen" Auswertung der Meßsignale sind Auflösungen bis in die Größenordnung von hundertstel Millimeter möglich. Eine entsprechende Auflösung ist an sich die gröbste Auflösung der üblichen linearen inkrementalen Meßsysteme. Es gibt eine Reihe von Verfahren und Schaltungsanordnungen, mit deren Hilfe aus den Meßsignalen Zwischenwerte abgeleitet werden, also die einen Tellungsschritt in der Größenordnung bis zu hundertstel Millimeter aufweisende Inkrementalteilung elektronisch weiter unterteilt wird. Als Beispiel seien hier Potentiometerschaltungen oder Interpolationsrechner genannt. Am Ausgang solcher Schaltungen werden wieder digitale Zählsignale erhalten. Derzeit sind Auflösungen bis in den Bereich von 1 µm üblich. Feinere Auflösungen bis in den Bereich von 0,1 µm sind möglich.

Bei vielen Anwendungsgebieten inkrementaler Linear-Meßsysteme interessiert zusätzlich zu den erhaltenen Weginformationen auch die momentane Verstellgeschwindigkeit. Dies trifft unter anderem für mit inkrementalen Linear-Meßsystemen ausgestattete Bahnsteuerungen, Werkzeugmaschinen und Roboter zu. Es ist bekannt, die Verstellgeschwindigkeit von Teilen durch mit ihren Antriebsmotoren gekuppelte Tacho-Generatoren zu ermitteln, die eine im wesentlichen der momentanen Drehzahl entsprechende, drehrichtungsabhängig gepolte Gleichspannung erzeugen. Es sind also für die Geschwindigkeitsermittlung gesonderte Tacho-Generatoren notwendig. Die tatsächliche Verstellgeschwindigkeit eines linear bewegten, über einen Motor angetriebenen Teiles, beispielsweise eines Werkzeugschlittens muß erst aus den auf die Drehgeschwindigkeit des Motors bezogenen Informationen abgeleitet bzw. berechnet werden, wobei sich bei zwischengeschalteten Getrieben weitere Komplikationen ergeben und der meist im Kraftübertragungsweg zwischen Motor und verstellbaren Teil mögliche oder vorhandene Schlupf nicht bzw. nicht vollständig berücksichtigt werden kann.

An Stelle von Tacho-Generatoren kann man zur Bestimmung von Drehzahlen, Drehwinkeln und Winkelgeschwindigkeiten auch andere Systeme verwenden. Bei diesen Systemen ist mit einem Motor, dessen Drehzahl, Drehwinkel oder Winkelgeschwindigkeit ermittelt bzw. überwacht werden soll ein magnetischer Pulsgeber verbunden, der mehrere auf einer Scheibe angeordnete Magnete aufweist, die an einem feststehenden Abtaster vorbeibewegt werden und in diesem sich lageabhängig ändernde Spannungen induzieren, die wieder digital zu Zählsignalen ausgewertet werden können. Man kann hier Drehzahl, Drehwinkel und Drehgeschwindigkeit wahlweise digital anzeigen bzw. erfassen oder auch dadurch eine Analoganzeige erhalten, daß man die digitalen Zählsignale über einen Wandler umformt. Die Auflösung solcher Meßeinrichtungen ist wesentlich gröber als die Auflösung von linearen Meßsystemen der gegenständlichen Art. Bei kleineren Drehwinkeln und geringen Geschwindigkeiten wird die Anzeige ungenau und schließlich bleibt auch bei Verwendung solcher Einrichtungen d prinzipielle Nachteil erhalten, daß aus der Motordrehzahl erst die Lineargeschwindigkeit berechnet werden müßte, wobei wieder die durch Schlupf, Rechenfehler usw. bedingten prinzipiellen Fehler auftreten können. Die entsprechende Anordnung ist überdies, wenn sie zusätzlich zu einem linearen Meßsystem ein eingesetzt würde, was an sich nicht vorgesehen ist, äußerst aufwendig.

Aufgabe der Erfindung ist die Schaffung eines Meßsystemes der eingangs genannten Art, bei dem mit einfachen Mitteln und ohne wesentliche Erhöhung des Schaltungsaufwandes auch Informationen über die momentane Verstellgeschwindigkeit erhalten und entsprechende Signale erzeugt und ausgewertet werden können.

Die gestellte Aufgabe wird durch die Merkmale von Anspruch 1 gelöst.

Bei der erfindungsgemäßen Ausführung kann der bisher übliche zusätzliche Tacho-Generator oder die sonstige Meßeinrichtung zur Bestimmung der Winkelgeschwindigkeit am Motor entfallen. Die erzeugte Analogspannung ist dem Istwert der Verstellgeschwindigkeit des linear bewegten Teiles proportional, wobei im Falle eines Werkzeugschlittens die tatsächliche Geschwindigkeit gemessen und nicht auf dem Umweg über die Motordrehzahl bzw. Winkelgeschwindigkeit des Antriebsmotors ermittelt wird. Ein weiterer Vorteil besteht darin, daß man durch entsprechende Festlegung der Parameter eine an die Bedürfnisse der jeweiligen Steuerung oder sonstigen Einrichtung, der die Analogspannung zugeführt wird, genau angepaßte Signalspannung erzeugen kann. Wegen der bei linearen Inkrementalmeßsystemen hohen Auflösung treten auch bei sehr geringer Verstellgeschwindigkeit Signale noch in genügender Anzahl auf, um aus ihnen eine der niedrigen Verstellgeschwindigkeit proportionale verstellrichtungsabhängig gepolte Analogspannung zu erzeugen, d. h. man erhält auch bei geringer Verstellgeschwindigkeit noch genau Aussagen über deren Große und Richtung, wogegen die bisher verwendeten Tacho-Generatoren usw. im niedrigen Drehzahlbereich keine ausreichende Spannung mehr abgeben, sich die Proportionalität Drehzahl/Spannung ändert und/oder bei den beschriebenen Drehmeldern eine entsprechende Proportionalität nur unter hohem Aufwand erreicht werden kann. Im Gegensatz dazu ist bei der erfindungsgemäßen Ausführung der zusätzliche Aufwand am linearen inkrementalen Meßsystem äußerst gering.

Nach Anspruch 1 weist die Digital-Analog-Umwandlungsschaltung eine Vor-Rückwärts-Zähleinrichtung auf, deren Zählerstand über einen Taktgeber gesteuert periodisch auf einen D/A-Wandler abfragbar ist.

Bevorzugt wird die Erfindung bei einem linearen Meßsystem mit optoelektronisch abgetastetem Inkrementalmaßstab angewendet.

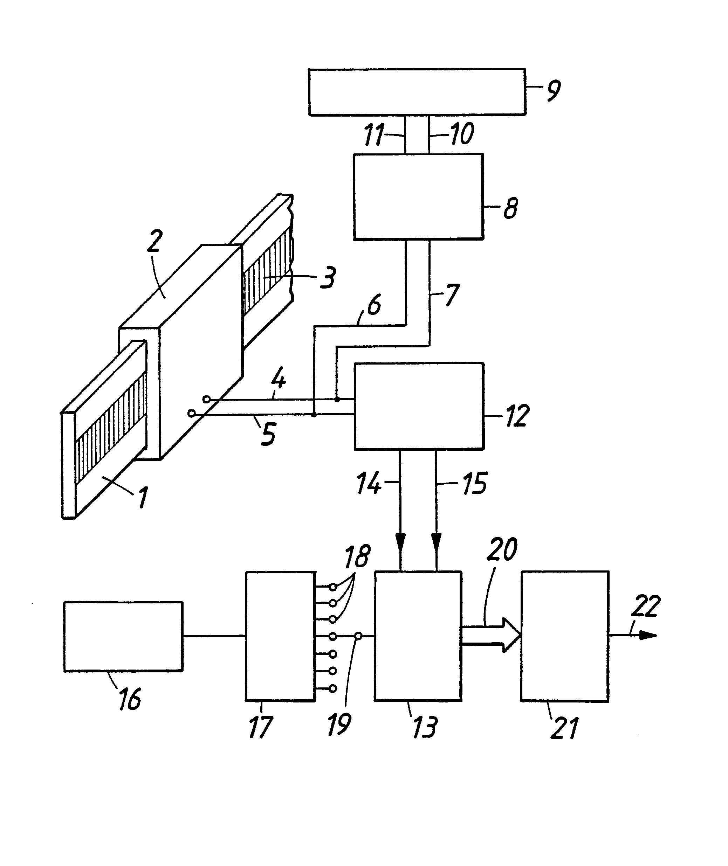

In der Zeichnung ist ein erfindungsgemäßes lineares, inkrementales Meßsystem im Blockschaltschema veranschaulicht.

Eine entlang eines Inkrementalmaßstabes 1 verstellbare Abtasteinheit 2 erzeugt beim Ausführungsbeispiel zwei analoge, in ihrer Grundform sinusförmige Spannungen, die gegeneinander phasenverschoben sind und deren Wellenlänge dem Teilungsschritt der Inkrementalteilung 3 am Maßstab 1 entspricht. Bei optoelektronischer Abtastung kann im Durchlicht oder Auflichtverfahren gearbeitet werden, wobei meist in bekannter Weise hinter um Teilungsbruchteile gegeneinander versetzten Abtastgittern angeordnete Photoempfänger durch die Meßteilung 3 und die Gitter hindurch beleuchtet werden. Die analogen Spannungen werden auf Leitungen 4, 5 gelegt. Von diesen Leitungen 4, 5 zweigen Leitungen 6, 7 zu einer Auswertungseinheit 8 ab, in der sie für die Erzeugung digitaler Zählsignale und eines Richtungserkennungssignales verwendet werden, welche Signale zur Steuerung einer beim Ausführungsbeispiel in die Einheit 8 integriert gezeichneten Vor-Rückwärts-Zähleinrichtung Verwendung finden, die ihrerseits die dargestellte Anzeigeeinrichtung 9, gegebenenfalls aber auch eine Steuereinrichtung für eine Maschinensteuerung mit Weginformationen versorgt. Auf der Anzeige 9 wird beispielsweise der Abstand der Abtasteinheit 2 von einem festen oder gewählten Nullpunkt am Maßstab 1 angezeigt. Zu einer Steuereinrichtung können von den Leitungen 10, 11 Nebenleitungen abzweigen. Soweit die Anordnung bisher beschrieben wurde, ist sie bei linearen, inkrementalen Meßsystemen allgemein üblich.

Beim Ausführungsbeispiel wird angenommen, daß als Teil einer Schaltung zur Erzeugung einer der Verstellgeschwindigkeit der Abtasteinheit 2 gegenüber dem Maßstab 1 proportionalen Istwert-Analogspannung eine eigene Impulsformerstufe 12 vorgesehen ist. Es wäre aber auch möglich, die Abzweigung der für die Erzeugung der Istwert-Analogspannung benötigten Signale erst nach einer gemeinsamen Impulsformerstufe vorzunehmen und die so geformten Signale in der Auswerteeinheit 8 und bei der erfindungsgemäßen Schaltung auszunützen. Von der Impulsformerstufe 12 werden einem Vor-Rückwärtszähler 13 über Leitungen 14, 15 einerseits Informationen über die Verstellrichtung und anderseits von den Analogsignalen auf den Leitungen 4, 5 abgeleitete Digitalsignale zugeführt.

Ein Taktgeber (Oszillator) 16 steuert eine programmierbare Teilerstufe 17, die mehrere Ausgänge 18 hat, die verschiedenen Teilungsverhältnissen zugeordnet sind. An einem das gewünschte Teilungsverhältnis aufweisenden Ausgang 18 liegt ein Eingang 19 des Zählers 13, der einen elektronischen Umschalter enthält, so daß das am Eingang 19 anliegende Taktsignal wechselweise einem reset- und einem latch-Eingang des Zählers 13 zugeführt wird. Der durch Ansteuerung des latch-Einganges festgehaltene Zählerstand wird periodisch über eine Leitung 20 auf einen Digital/Analog-Umsetzer 21 ausgelesen, wobei auch Informationen über die Zählrichtung weitergegeben werden, so daß an einer Ausgangsleitung 22 des D/A-Umsetzers 21 eine Spannung anliegt, die der Verstellgeschwindigkeit der Abtasteinheit 2 proportional und entsprechend der Verstellrichtung gepolt ist. Durch Beaufschlagung des reset-Einganges wird der Zähler 13 jeweils auf Null gesetzt. Die Anzahl der zwischen Beaufschlagungen des reset-Einganges und des latch-Einganges des Zählers 13 einlangenden Zählimpulse, also der jeweils in den D/A-Umsetzer ausgelesene aktuelle Zählerstand ist, wie erwähnt, der Verstellgeschwindigkeit der Abtasteinheit 2 gegenüber dem Maßstab 1 direkt proportional. Die Spannung auf der Leitung 22 kann bei einer Maschinensteuerung eingesetzt werden. Beispielsweise kann man bei einer Werkzeugmaschine die Werkzeug- oder Werkstückverstellgeschwindigkeit in Maßstabrichtung über diese Spannung eingeben.

### Patentansprüche

1. Lineares Meßsystem, mit einem Inkrementalmaßstab (1), einer Abtasteinheit (2) zur Erzeugung verstellrichtungsabhängig phasenverschobener, analoger Abtastsignale und einer Auswerteeinheit (8) zur Erzeugung von digitalen Zählsignalen aus diesen Abtastsignalen, die einer Vor-Rückwärts-Zähleinrichtung (8) zuführbar sind, welche ihrerseits eine Anzeige- und/oder Steuereinrichtung (9) steuert, dadurch gekennzeichnet, daß zusätzlich aus den analogen Abtastsignalen gewonnene Digitalsignale einer Analog-Digital-Umwandlungsschaltung (13, 16, 17, 21) zur Erzeugung einer der Abtastgeschwindigkeit proportionalen, verstellrichtungsabhängig gepolten Analogspannung zuführbar sind, daß die Digital-Analogumwandlungsschaltung (13, 16, 17, 21) eine Vor-Rückwärts-Zähleinrichtung (13) aufweist, deren Zählerstand über einen Taktgeber (16, 17) gesteuert periodisch auf einen D/A Wandler (21) abfragbar ist, an dessen Ausgang (22) die verstellrichtungsabhängig gepolte Analogspannung ansteht und daß die Proportionalität dieser Analogspannung zur Verstellgeschwindigkeit über eine programmierbare Teilerstufe (17) zwischen Taktgeber (I6) und D/A-Wandler einstellbar ist.

2. Meßsystem nach Anspruch 1, dadurch gekennzeichnet, daß es als lineares Meßsystem (1, 2) mit optoelektronisch abgetastetem Inkrementalmaßstab (1) ausgebildet ist.

### Claims

1. A linear measuring system comprising an incremental scale member, a scanning unit for generating analog signals, which are displaced in place in a sense depending on the direction of the adjustment, and a processor (8) for generating digital countable signals, which are derived from said analog signals end are adapted to be delivered to a bidirectional counter (8), which controls an indicating and/or control device, characterized in that digital signals derived from the analog signals are additionally adapted to be delivered to an analog-to-digital converting circuit (13, 16, 17, 21) for generating an analog voltage, which is proportional to the scanning speed and has a polarity that depends on the direction of adjustment, the digital-to-analog converting circuit (13, 16, 17, 21) comprises a bidirectional counter (13), the count of which is adapted to be periodically sampled by a D/A converter (21) under the control of a clock (16, 17), said D/A converter (21) presents at its output (22) the analog voltage, which has a polarity that depends on the direction of adjustment, and the proportionality of said analog voltage to the velocity of the adjustment is adjustable by a programmable frequency divider stage (17) between the clock (16) and the D/A converter.

2. A measuring system according to claim 1, characterized in that it consists of a linear measuring system (1, 2) having an optoelectronically scanned incremental scale member (1).

### Revendications

1. Système de mesure linéaire comprenant une règle graduée incrémentielle (1), une unité de lecture (2) pour produire les signaux de lecture analogues, déphasés et dépendant de la direction de déplacement et une unité d'exploitation (8) pour produire des signaux numériques de comptage à partir des signaux de lecture qui peuvent être appliqués à une unité de comptage (8) comptant vers l'avant et l'arrière et qui de son côté contrôle un dispositif d'affichage et/ou de contrôle (9), caractérisé en ce qu'en supplément des signaux numériques obtenus à partir des signaux de lecture analogue peuvent être alimentés dans un circuit de conversion analogue /numérique (13, 15, 17, 21) pour produire une tension analogue polarisée en fonction de la direction de déplacement et proportionnelle à la vitesse de lecture, que le circuit de conversion numérique/analogue (13, 16, 17, 21) comprend un compteur (13) comptant vers l'avant et vers l'arrière dont le contenu peut être lu sur un convertisseur numérique/analogue (21) sous le contrôle périodique d'une horloge (16, 17), la tension analogue polarisée suivant la direction de déplacement apparaissant à la sortie (22) de ce convertisseur et que la proportionalité de cette tension analogue peut être ajustée par rapport à la vitesse de lecture au moyen d'un étage diviseur programmable entre l'horloge (16) et le convertisseur numérique/analogue.

2. Système de mesure selon la revendication 1, caractérisé en ce qu'il est conçu comme système de mesure linéaire (1, 2) comprenant une règle incrémentielle (1) à lecture optoélectronique.